**Europäisches Patentamt**

**European Patent Office**

**Office européen des brevets**

(19)

(11) Veröffentlichungsnummer: **0 308 762 B1**

(12) **EUROPÄISCHE PATENTSCHRIFT**

(45) Veröffentlichungstag der Patentschrift: **13.05.92**

(51) Int. Cl.⁵: **G05D 3/14**

(21) Anmeldenummer: **88114893.6**

(22) Anmeldetag: **12.09.88**

(54) **Einrichtung zum Regeln der Lage eines hydraulischen Vorschubantriebs, insbesondere einer hydraulischen Presse oder Stanze.**

(30) Priorität: **24.09.87 DE 3732221**

(43) Veröffentlichungstag der Anmeldung:
**29.03.89 Patentblatt 89/13**

(45) Bekanntmachung des Hinweises auf die
Patenterteilung:
**13.05.92 Patentblatt 92/20**

(84) Benannte Vertragsstaaten:
**BE CH DE ES FR GB IT LI NL**

(56) Entgegenhaltungen:
**DE-A- 3 532 931**

(73) Patentinhaber: **SIEMENS AKTIENGESELL-
SCHAFT**
**Wittelsbacherplatz 2**
**W-8000 München 2(DE)**

(72) Erfinder: **Baisch, Roderich, Dipl.-Ing.**
**Borsigstrasse 1a**
**W-8520 Erlangen(DE)**
Erfinder: **Papiernik, Wolfgang, Dr.**
**Eskilstunastrasse 9**
**W-8520 Erlangen(DE)**
Erfinder: **Schnös, Elfriede, Dipl.-Ing.**
**Meisenweg 29**
**W-8520 Erlangen(DE)**

**Beschreibung**

Die Erfindung bezieht sich auf eine Einrichtung zum Regeln der Lage eines hydraulischen Vorschubantriebs, insbesondere einer Presse oder Stanze, über ein den Volumenstrom der Hydraulikflüssigkeit einer Zylinder-Kolben-Anordnung beeinflusses Stellglied, wobei ein auf dieses einwirkender Regler, dessen Regeldifferenz durch die Differenz von vorgegebener Soll- und direkt erfaßter Ist-Lage gegeben ist, für eine Geschwindigkeits- und Beschleunigungsregelung unter Zuhilfenahme eines Beobachters mit aus der Lageänderung resultierenden Geschwindigkeitswerten und Beschleunigungswerten beaufschlagt wird.

Bei handelsüblichen hydraulischen Pressen oder Stanzen wird deren Lage, d.h. der Abstand zwischen Ober- und Unterwerkzeug, durch offene Steuerketten mit mechanischen oder elektrischen Nockensteuerwerken, die auf die Zylinder-Kolben-Anordnung einwirken, dem Betrieb angepaßt. Regeleingriffe werden weitgehend manuell durch den Bediener vorgenommen. Dadurch ergeben sich relativ lange Einricht- und Umrüstzeiten und Störungen, wie Temperaturdrift und Offset, werden nicht selbsttätig ausgeregelt. Ferner ist aus der DE-OS 35 32 941 eine Einrichtung der eingangs genannten Art genannt, bei der eine weg-, geschwindigkeits- und beschleunigungsabhängige Regelung eine hydraulischen Presse oder Stanze beschrieben ist. Dabei wird mit Hilfe eines Beobachters, der aus einer Vielzahl von in ihren Parametern einstellbaren Gliedern besteht, die zu erwartende Geschwindigkeit und Beschleunigung ermitteln, so daß diese Werte dem eigentlichen Prozeß nicht entnommen werden müssen. Der Abgleich eines derartigen Beobachters ist allerdings nur äußert schwierig vorzunehmen.

Aufgabe der Erfindung ist es, eine Einrichtung der eingangs genannten Art mit einem technisch äußert einfachen Beobachter zu realisieren.

Die Erfinder sind dabei davon ausgegangen, daß Mittel zur Lagerfassung und Geschwindigkeiterfassung ohne größeren Aufwand zur Verfügung gestellt werden können und einzig die Bestimmung oder zu erwartenden Beschleunigung durch einen Beobachter erfolgen müßte. Ferner ist erkannt worden, daß bei handelsüblichen Pressen oder Stanzen stets Mittel zur Erfassung des Druckes vorgesehen sind.

Gemäß der Erfindung wird die oben genannte Aufgabe dadurch gelöst, daß die Ist-Geschwindigkeit direkt erfaßt wird und nur die zu erwartende Ist-Beschleunigung im Beobachter ermittelt wird, indem die zu erwartende Ist-Beschleunigung durch den Beobachter aus dem Druck der Hydraulikflüssigkeit und der IstGeschwindigkeit ermittelt wird, wozu der Beobachter ein Integralglied aufweist, dem als Eingangsgröße der Druck der Hydraulikflüssigkeit zugeführt wird, woraus als Ausgansgröße die zu erwartende Geschwindigkeit bei nicht vorliegenden Störgrößen bestimmt wird, daß diese zu erwartende Geschwindigkeit wiederum mit der Ist-Geschwindigkeit verglichen wird, daß das resultierende Differenzergebnis einem auf den Eingang des Integralglieds des Beobachters rückgekoppelten Reglers des Beobachters zugeführt wird, wobei das Ausgangssignal dieses Reglers den Störgrößen entspricht, und daß aus der Summe des Drucks der Hydraulikflüssigkeit und des durch den Beobachter ermittelten Störsignals die zu erwartende Beschleunigung bestimmt wird.

Mit einer solchen Zustandsregelung kann die Eigenfrequenz der Zylinder-Kolben-Anordnung, die direkt oder über einige wenige Getriebelement mit dem Werkzeug verbunden ist so stark bedämpft werden, daß sich die Hydraulikeinheit nach außen hin quasi wie ein starres System verhält. Die Dynamik der Regelung hängt damit nur noch von der Schnelligkeit des Stellgliedes und von der Abtastzeit der Datenverarbeitung ab. Die Tatsache, daß bei der Erfindung keine Beschleunigungsmessung, sondern eine Messung des Druckes und der Geschwindigkeit benützt wird, hat prinzipiell den Vorteil, daß eine Druckmessung einfach und kostengünstig technish realisiert werden kann und dabei meist genauer als eine Beschleunigungsmessung ist und daß eine Druckmessung bereits ohnehin für Überwachungszwecke, z.B. eine Maximaldrucküberwachung und eine bestimmung der Preßkraft vorhanden ist.

Eine vorteilhafte Ausbildung der Erfindung ist dadurch gekennzeichnet, daß der Regler des Beobachters als üblicher PI-Glied ausgebildet ist, der dann auch die Möglichkeit eröffnet, daß das aus dem integralen Verhalten des Reglers des Beobachters resultierende Ausgangssignal die vom eigentlichen Regler des hydraulischen Vorschubantriebs ermittelte Stellgröße für das Stellsignal korrigiert. Durch eine deartige Störgrößenaufschaltung können an der Strecke angreifende Störungen durch Reibung, Lastverhalten und ähnliches bereits ohne Eingriff durch den eigentlichen Regler weitgehend kompensiert werden.

Ein Ausführungsbeispiel der Erfindung ist in der Zeichnung dargestellt und wird im folgenden näher erläutert. Dabei zeigen:

FIG 1    die regelungstechnische Struktur einer hydraulischen Presse,

FIG 2    ein Blockschaltbild der Gesamteinrichtung und

FIG 3    ein Blockschaltbild eines Reglers.

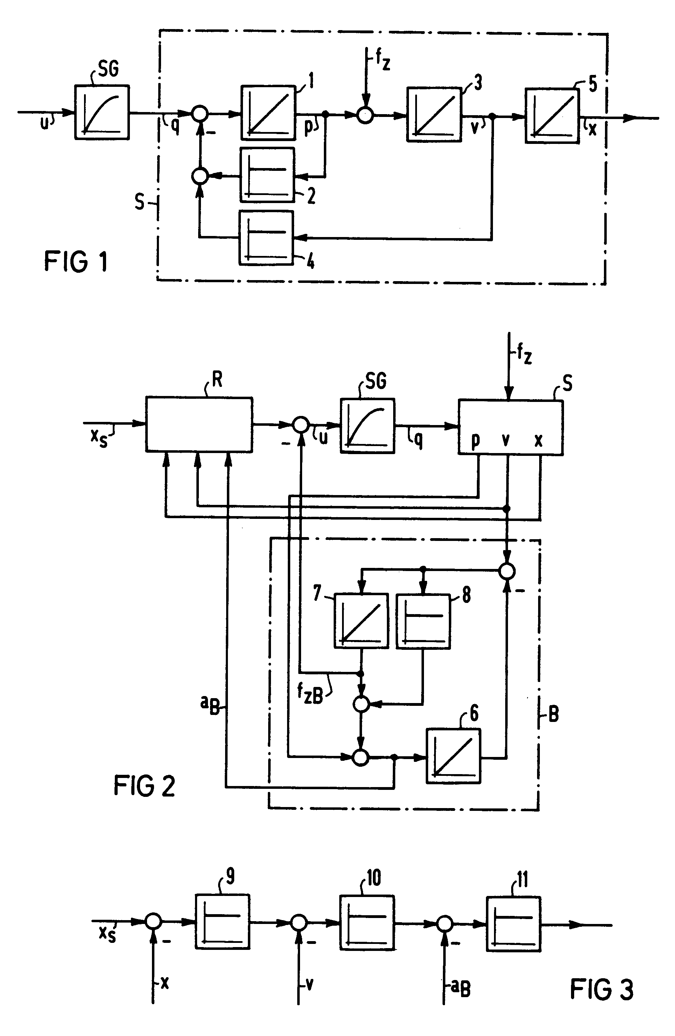

In der Darstellung gemäß FIG 1 ist die regelungstechnische Struktur der Zylinder-Kolben-Anordnung einer hydraulischen Presse gezeigt, die in ihrer Gesamtheit eine Regelstrecke S (gestrichelt dargestellt) ergibt. Dem Zylinder wird dabei eingangsseitig ein Volumenstrom q eines Druckmittels zugeführt, wobei dieser Volumenstrom entsprechend einer Steuerspannung u über ein Stellglied SG einstellbar ist.

Der Volumenstrom ergibt im Zylinder einen Druck, genau gesagt einen Differenzdruck p, wobei diese Beziehung integralen Charakter aufweist, wie dies durch ein Übertragungsglied 1 mit Integralverhalten dargestellt ist. Die Druckmittelrückströmungsverluste an den Zylinderwandungen sind durch ein rückkoppelndes Übertragungsglied 2 mit Proportionalverhalten berücksichtigt. Der Druck p im Zylinder bewirkt eine der Fläche des Kolbens proportionale Kraft, die diesen beschleunigt. Diese Kraft wird jedoch durch Störgrößen $f_z$, z.B. Reibungskräfte, reduziert. Die im Endeffekt resultierende Kraft verleiht dem Kolben eine Geschwindigkeit v gemäß einer integralen Funktion, wie dies im Blockschaltbild durch ein Übertragungsglied 3 mit Integralverhalten dargestellt ist.

Abhängig von der Geschwindigkeit v des Kolbens erfolgt eine Druckentspannung des Druckmittels und diese wird im Blockschaltbild durch das proportionale rückkoppelnde Übertragungsglied 4 berücksichtigt.

Der aus den bekannten Bewegungsgleichungen resultierende integrale Zusammenhang zwischen Lage x und Geschwindigkeit v findet dann seinen Niederschlag im Integralverhalten eines an den Ausgang des Übertragungsgliedes 3 geschalteten Übertragungsglied 5, an dessen Ausgang als Ausgangsgröße der Anordnung die Lage des Kolbens, d.h. die Lage x der Presse, ansteht. Die Parameter der Übertragungsglieder 1 bis 4 sind für jeden Stellzylinder konstruktiv bedingt und können relativ einfach durch Versuche bestimmt werden.

In der Darstellung gemäß FIG 2 ist ein Blockschaltbild der Einrichtung zum Regeln der Lage einer hydraulischen Presse gezeigt. Dabei entspricht die Strecke S der in FIG 1 gezeigten Strecke. Ebenso entspricht das Stellglied SG in FIG 2 demjenigen nach FIG 1. Zum Regeln der Lage x wird eine Soll-Lage $x_s$ einem Regler R zugeführt, der als primäre Regelgröße die Lage x der Kolben-Zylinder-Anordnung bzw. des Pressenwerkzeugs berücksichtigt, der aber auch die entsprechende Geschwindigkeit v sowie die ursächliche Beschleunigung $a_B$ in die damit hochdynamische Regelung einbezieht und dementsprechend eine Stellgröße für das Stellglied SG, z.B. ein $PT_1$-Glied mit sehr hoher Eckfrequenz, vorgibt.

Während die Lage x sowie auch die Geschwindigkeit v mit einfachen für Pressen üblichen Meßmitteln detektiert werden können, ist dies für die Beschleunigung $a_B$ nicht ohne weiteres möglich. Die Beschleunigung $a_B$ wird daher mit Hilfe eines Beobachters B (gestrichelt dargestellt) aus dem Druck (genau gesagt dem Differenzdruck) p der Hydraulikflüssigkeit sowie der gemessenen Geschwindigkeit v indirekt ermittelt. Dieser Sachverhalt findet seinen Niederschlag dadurch, daß die Beschleunigung $a_B$ in der Symbolik den Index B führt.

Um die Beschleunigung $a_B$ zu ermitteln, weist der Beobachter B ein Integralglied 6 auf, dem als Eingangsgröße der Druck p der Hydraulikflüssigkeit gemeldet wird und das aus dem physikalischen Zusammenhang heraus als Ausgangsgröße die zu erwartende Geschwindigkeit bei nicht vorliegenden Störgrößen $f_z$ bestimmt. Insofern kann das Integralglied 6 im weitesten Sinne als ein Modell der Strecke S angesehen werden. Die vom Integralglied 6 ermittelte theoretische Geschwindigkeit wird mit der Ist-Geschwindigkeit v verglichen und das Differenzsignal wird einem Regler des Beobachters B zugeführt, der aus einem Übertragungsglied 7 mit Integralverhalten und einem Übertragungsglied 8 mit Proportionalverhalten besteht. Die Parallelschaltung der Übertragungsglieder 7 und 8 ergibt insgesamt gesehen ein Übertragungsglied mit PI-Verhalten. Das von dieser Anordnung gewonnene Ausgangssignal wird auf den Eingang des Integralgliedes 6 rückgekopelt und die daraus resultierende Regelung führt dazu, daß am Ausgang des Übertragungsgliedes 7 ein dem Störsignal $f_z$ entsprechendes Signal $f_{zB}$ ansteht, daß das Störsignal $f_z$ nach Art einer Störgrößenaufschaltung weitgehend kompensiert.

Da dem Integralglied 6 eingangsseitig die Summe aus vom Beobachter B ermitteltem Störgrößensignal $f_{zB}$ sowie Druck p der Hydraulikflüssigkeit zugeführt wird, stellt dieses Eingangssignal des Integralgliedes 6 den tatsächlich wirksamen, eine Beschleunigung auslösenden Druck für der Kolben-Zylinder-Anordnung dar. Da die sich demzufolge gemäß der wirksamen Fläche des Kolbens ergebende Kraft proportional der resultierenden Beschleunigung ist, kann das Eingangssignal des Integrators 6 als ein die Beschleunigung $a_B$ angebendes Signal dem Regler R zugeleitet werden.

Der Regler R gemäß FIG 2 kann dabei, wie in FIG 3 gezeigt, als eine Reihenschaltung von drei Übertragungsgliedern 9, 10 und 11 mit Proportionalverhalten ausgebildet sein, wobei dem Übertragungsglied 9 als Regelgröße die Lagendifferenz, dem Übertragungsglied 10 die Geschwindigkeitsdifferenz und dem Übertragungsglied 11 die Beschleunigungsdifferenz zugeführt werden kann.

**Patentansprüche**

1.    Einrichtung zum Regeln der Lage eines hydraulischen Vorschubantriebs, insbesondere einer Presse oder Stanze, über ein den Volumenstrom der Hydraulikflüssigkeit einer Zylinder-Kolben-Anordnung beeinflussendes Stellglied (SG), wobei ein auf dieses einwirkender Regler (R), dessen Regeldifferenz durch die Differenz von vorgegebener Soll- ($x_s$) und direkt erfaßter IstLage (x) gegeben ist, für eine Geschwindigkeits- und Beschleunigungsregelung unter Zuhilfenahme eines Beobachters (B) mit aus der Lageänderung resultierenden Geschwindigkeitswerten (v) und Beschleunigungswerten ($a_B$) beaufschlagt wird, **dadurch gekennzeichnet,** daß die IstGeschwindigkeit (v) direkt erfaßt wird und nur die zu erwartende Ist-Beschleunigung ($a_B$) im Beobachter (B) ermittelt wird, indem die zu erwartende Ist-Beschleunigung ($a_B$) durch den Beobachter (B) aus dem Druck (p) der Hydraulikflüssigkeit und der Ist-Geschwindigkeit (v) ermittelt wird, wozu der Beobachter (B) ein Integralglied (6) aufweist, dem als Eingangsgröße der Druck (p) der Hydraulikflüssigkeit zugeführt wird, woraus als Ausgangsgröße die zu erwartende Geschwindigkeit bei nicht vorliegenden Störgrößen bestimmt wird, daß diese zu erwartende Geschwindigkeit wiederum mit der Ist-Geschwindigkeit (v) verglichen wird, daß das resultierende Differenzergebnis einem auf den Eingang des Integralglieds (6) des Beobachters (B) rückgekoppelten Reglers (7,8) des Beobachters (B) zugeführt wird, wobei das Ausgangssignal dieses Reglers (7,8) den Störgrößen entspricht, und daß aus der Summe des Drucks (p) der Hydraulikflüssigkeit und des durch den Beobachter ermittelten Störsignals die zu erwartende Ist-Beschleunigung ($a_B$) bestimmt wird.

2. Einrichtung nach Anspruch 1, **dadurch gekennzeichnet,** daß der Regler (7,8) des Beobachters (B) als ein PI-Glied (7,8) ausgebildet ist.

3. Einrichtung nach Anspruch 2, **dadurch gekennzeichnet,** daß das aus dem integralen Verhalten des Reglers (7) des Beobachters (B) resultiende Ausgangssignal ($f_{ZB}$) die vom eigentlichen Regler (R) des hydraulischen Vorschubantriebs ermittelte Stellgröße für das Stellglied (SG) korrigiert.

## Claims

1. Device for controlling the position of a hydraulic feed drive, in particular a press or punch, by way of a control element (SG) which affects the volume rate of flow of the hydraulic fluid of a cylinder-piston arrangement, in which velocity values (v) and acceleration values ($a_B$), resulting from the change in position, are applied to a controller (R), which acts upon said control element and the control difference of which is given by the difference of preset rated position ($x_S$) and directly detected actual position (x), for velocity and acceleration control with the aid of an observer (B), characterised in that the actual velocity (v) is detected directly and only the expected actual acceleration ($a_B$) is determined in the observer (B) in that the expected actual acceleration ($a_B$) is determined by the observer (B) from the pressure (p) of the hydraulic fluid and the actual velocity (v), for which purpose the observer (B) has an integrator element (6) to which the pressure (p) of the hydraulic fluid is fed as an input variable, from which the expected velocity is determined as an output variable when disturbance variables are not present, in that this expected velocity is compared in turn with the actual velocity (v), in that the resultant difference result is fed to a controller (7, 8) of the observer (B) coupled back to the input of the integrator element (6) of the observer (B), with the output signal of this controller (7, 8) corresponding to the disturbance variables, and in that the expected actual acceleration ($a_B$) is determined from the sum of the pressure (p) of the hydraulic fluid and the disturbance signal determined by the observer.

2. Device according to claim 1, characterised in that the controller (7, 8) of the observer (B) is formed as a PI element (7, 8).

3. Device according to claim 2, characterised in that the output signal ($f_{ZB}$) resulting from the integral behaviour of the controller (7) of the observer (B) corrects the control variable for the control element (SG) determined by the actual controller (R) of the hydraulic feed drive.

## Revendications

1. Dispositif pour régler la position d'un dispositif d'avance hydraulique, notamment d'une presse ou d'une machine à poinçonner, par l'intermédiaire d'un organe de réglage (SG), qui influe sur le débit volumique du liquide hydraulique d'un dispositif à cylindre et piston, et dans lequel un régulateur (R), qui agit sur ce circuit de réglage et dont la différence de réglage est déterminée par la différence entre une position prédéterminée de consigne ($x_S$) et une position réelle (x) détectée directement, est chargée, pour un réglage de la vitesse et de l'accélération, par l'intermédiaire d'un dispositif d'observation (B), avec des valeurs de vitesse (v) et des valeurs d'accélération ($a_B$)-

,qui sont obtenues à partir de la variation de position, caractérisé par le fait que la vitesse réelle (v) est détectée directement et que seule l'accélération réelle ($a_B$), à laquelle on peut s'attendre, est déterminée dans le dispositif d'observation (B), par le fait que l'accélération réelle ($a_B$), à laquelle on peut s'attendre, est déterminée par le dispositif d'observation (B) à partir de la pression (p) du liquide hydraulique et de la vitesse réelle (v), qu'à cet effet le dispositif d'observation (B) comporte un circuit à action intégrale (6), auquel est envoyée, en tant que grandeur d'entrée, la pression (p) du liquide hydraulique, à partir de quoi la vitesse, à laquelle on peut s'attendre, est déterminée en tant que grandeur de sortie dans le cas où aucune grandeur perturbatrice n'est présente, que cette vitesse, à laquelle on peut s'attendre, est à nouveau comparée à la vitesse réelle (v), que le résultat de différence obtenu est envoyé à un régulateur (7,8) du dispositif d'observation (B), qui est couplé par réaction à l'entrée du circuit à action intégrale (6) de ce dispositif d'observation (B), le signal de sortie de ce régulateur (7,8) correspondant aux grandeurs perturbatrices, et que l'accélération réelle ($a_B$), à laquelle on peut s'attendre, est déterminée à partir de la somme de la pression (p) du liquide hydraulique et du signal perturbateur déterminé par le dispositif d'observation.

2. Dispositif suivant la revendication 1, caractérisé par le régulateur (7,8) du dispositif d'observation (B) est réalisé sous la forme d'un circuit à action proportionnelle et intégrale (7,8).

3. Dispositif suivant la revendication 2, caractérisé par le fait que le signal de sortie ($f_{ZB}$), qui résulte du comportement intégral du régulateur (7) du dispositif d'observation (B), corrige la grandeur de réglage, déterminée par le régulateur (R) proprement dit du dispositif d'avance hydraulique, pour l'organe de réglage (SG).

FIG 1

FIG 2

FIG 3